(19) **Europäisches Patentamt / European Patent Office / Office européen des brevets**

(11) **EP 1 211 888 B1**

(12) **FASCICULE DE BREVET EUROPEEN**

(45) Date de publication et mention
de la délivrance du brevet:
**02.03.2011 Bulletin 2011/09**

(51) Int Cl.:
***H04N 5/33*** (2006.01)

(21) Numéro de dépôt: **01403053.0**

(22) Date de dépôt: **28.11.2001**

(54) **Dispositif de detection de rayonnement infra-rouge**

INFRAROTSTRAHLUNGSDETEKTIONSEINRICHTUNG

Infrared radiation-detecting device

(84) Etats contractants désignés:
**DE GB IT**

(30) Priorité: **30.11.2000 FR 0015488**

(43) Date de publication de la demande:
**05.06.2002 Bulletin 2002/23**

(73) Titulaire: **Commissariat à l'Énergie Atomique
et aux Énergies Alternatives
75015 Paris (FR)**

(72) Inventeurs:
• **Martin, Jean-Luc
38620 Saint-Geoire-en-Valdane (FR)**

• **Mottin, Eric
38950 Saint-Martin-Le-Vinoux (FR)**
• **Laflaquiere, Arnaud
38000 Grenoble (FR)**

(74) Mandataire: **Poulin, Gérard et al
BREVALEX
95 rue d'Amsterdam
75378 Paris Cedex 8 (FR)**

(56) Documents cités:
**US-A- 5 600 143 US-A- 5 811 808
US-A- 6 028 309**

**Description**

L'invention se situe dans le domaine de la photodétection de rayonnements électromagnétiques au moyen de détecteurs thermiques, par exemple des micro-bolomètres, et concerne plus particulièrement un dispositif de génération d'image à partir d'un rayonnement IR comportant un module de détection comprenant une pluralité de détecteurs thermiques ayant chacun une résistance électrique spécifique et étant polarisé pour délivrer un signal représentatif d'un rayonnement IR détecté, un module de lecture destiné à transformer ledit signal électrique en signal, vidéo par exemple, exploitable par un bloc de traitement d'image et un module de compensation de signal de courant comportant une première branche destinée à extraire dudit signal électrique un premier signal de courant de polarisation ayant une valeur constante.

L'invention concerne également un procédé de correction d'un signal électrique représentant un rayonnement IR détecté par un détecteur thermique ayant une résistance électrique spécifique, le procédé comportant une première étape permettant d'extraire du signal électrique un premier signal de courant de polarisation ayant une valeur constante.

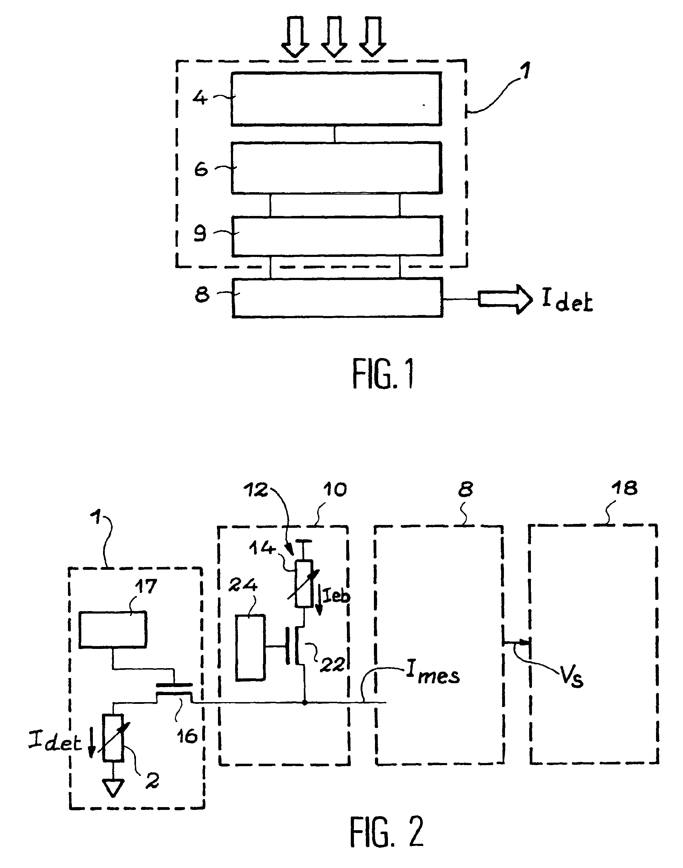

La figure 1 représente un détecteur thermique constitué par un micro-bolomètre 2 dont la grandeur caractéristique mesurable est la résistance électrique. Le micro-bolomètre est constitué d'un absorbeur 4 et d'un thermomètre 6. L'ensemble étant séparé du module de lecture 8 par une couche thermiquement isolante 9.

A une température déterminée, par exemple la température de régulation du détecteur, la résistance du micro-bolomètre 2 est donnée par la loi :

$$R = R_0 \exp \frac{-qE_a}{kT}$$

avec $E_a$ énergie d'activation du matériau (eV) ;
q charge de l'électron ;
k constante de Boltzmann ;
T température absolue.

Le plan focal du module de détection comporte généralement plusieurs micro-bolomètres 2 qui peuvent être répartis soit sur une matrice à M lignes et N colonnes par exemple au format standard Télévision pour former un dispositif de détection matriciel, soit selon une ligne ou une colonne pour former un module de détection mono-directionnel.

Lorsqu'un micro-bolomètre 2 est éclairé par un rayonnement d'énergie IR suffisante, il subit un échauffement proportionnel à la quantité de rayonnement qu'il reçoit. Cet échauffement se traduit par la variation de sa résistance qui est exploitée pour conditionner un courant ou une tension électrique au moyen du module de lecture 8.

Un problème des dispositifs de détection de l'art antérieur provient du fait que le signal utile, dû aux variations de température des micro-bolomètres, représente seulement environ 0.5% du signal total issu du thermomètre 6. De ce fait, pour amplifier le signal nécessaire à la formation d'image, la chaîne d'amplification du module de lecture 8 doit avoir une grande dynamique d'entrée. Cependant, en raison des contraintes géométriques dimensionnelles, il est difficile de réaliser des circuits conciliant une grande dynamique d'entrée, un grand gain, une bonne linéarité et un faible bruit.

Une solution connue pour contourner cette difficulté consiste à amplifier uniquement la partie du signal nécessaire à la formation d'image. Pour cela, il faut supprimer une fraction importante du signal délivré par le micro-bolomètre 2, notamment le signal de courant dû à la polarisation des détecteurs.

Par ailleurs, du fait que les micro-bolomètres sont très sensibles aux variations de température du plan focal du module de détection, il est nécessaire d'utiliser des moyens de régulation de température pour garantir la stabilité des signaux de sortie. Ceci a pour conséquence d'accroître la complexité et le coût du module de détection.

Un autre problème des dispositifs de détection connus provient du fait que les micro-bolomètres fabriqués collectivement présentent des valeurs de résistance dispersées. Aussi, pour un rayonnement IR donné, plusieurs micro-bolomètres sont saturés et délivrent des signaux dont les fluctuations sont situées en dehors de la plage de la dynamique de l'étage d'entrée du module de lecture 8.

Aussi, pour diminuer le nombre de micro-bolomètres saturés, il convient d'adapter spécifiquement la réponse de chaque micro-bolomètre pour la centrer dans la dynamique de l'étage d'entrée du module de lecture 8.

La figure 2 représente un schéma d'un dispositif de l'art antérieur utilisé pour adapter la réponse du micro-bolomètre 2 à la dynamique de l'étage d'entrée du module de lecture 8. Ce dispositif comporte un module de compensation 10 dans lequel une branche d'ébasage 12 permet d'extraire une partie constante correspondant au signal de courant de polarisation du courant électrique $I_{det}$ délivré par le micro-bolomètre 2. A cet effet, la branche d'ébasage 12 comporte un micro-bolomètre passif 14 générant un bruit de même formulation analytique que le bruit du micro-bolomètre actif 2 et présentant une résistance thermique faible par rapport à la résistance thermique du micro-bolomètre actif 2. De ce fait, sa sensibilité à la scène est très faible mais sa sensibilité aux fluctuations de température du plan focal est identique à celle du micro-bolomètre actif 2.

Dans le dispositif représenté à la figure 2, le micro-bolomètre actif 2 est polarisé en tension et est couplé à l'étage d'entrée du module de lecture 8 via un transistor d'injection 16 piloté par une première source de tension filtrée 17. La branche d'ébasage 12 délivre quant à elle un courant Ieb par l'intermédiaire du premier transistor d'injection 22 piloté par une source de tension filtrée 24. La différence (Imes = Idet - Ieb) est traitée par le module de lecture 8, dans lequel le courant est converti en une tension Vs par un convertisseur courant-tension. La tension Vs est ensuite fournie au bloc de traitement d'image 18 en vue de générer une image représentative du rayonnement IR capté. Le micro-bolomètre passif 14 est monté en série avec un premier transistor 22 dont la conduction est commandée par une deuxième source de tension filtrée 24.

Après extraction par la branche 12 du signal de polarisation, le courant $I_{mes}$ résultant comporte encore des dispersions dues aux écarts entre les résistances électriques des micro-bolomètres 2 répartis sur le plan focal du module de détection 1. Il est alors souhaitable d'effectuer un ébasage adapté à chaque micro-bolomètre pour supprimer le courant excédentaire ou déficitaire dû à cette dispersion des résistances bolométriques.

Un ébasage adapté permet de diminuer la fraction $\dfrac{\text{Courant mesuré}}{\text{Courant détecteur}}$ en autorisant la soustraction d'un courant adapté à chaque micro-bolomètre.

Or, pour mettre en oeuvre un ébasage adapté, il convient d'utiliser un système numérique apte à mémoriser des valeurs de coefficients $C_x(i,j)$ pour toute l'image et réaffecter ensuite ces coefficients préalablement convertis par une conversion de type Numérique-Analogique au plan focal. La conversion des données numériques en signaux analogiques est une opération source de bruit et il est difficile d'utiliser des convertisseurs Numériques-Analogiques disponibles actuellement sur le marché sans dégrader de manière excessive le bruit du détecteur thermique lorsque la correction est envisagée sur le signal de polarisation en entier.

En outre, la mise en oeuvre d'un ébasage adapté nécessite une prise de référence définitive ou périodique.

Pour une prise de référence définitive, une procédure de calibration peut être mise en place lors de la fabrication du module de détection. Cette procédure comporte plusieurs phases :

- Phase d'acquisition des données analogiques d'une scène uniforme.
- Phase de conversion des données analogiques en données numériques afin d'être mémorisées.
- Phase de mémorisation des données numériques.

A l'issue de cette procédure, une mémoire est configurée et sera la représentation à une température donnée du plan focal considéré.

Cette procédure qui a l'avantage d'être faite une fois pour toutes, présente cependant les inconvénients suivants :

- chaque détecteur nécessite une calibration initiale spécifique.
- toute variation ou dérive à long terme ne sera pas prise en compte.

Le Document US-5 600 143-A (WALMSLEY CHARLES F et al.) décrit un dispositif détecteur infrarouge comportant une pluralité d'éléments photoconducteurs qui délivrent chacun un signal électrique en réponse à une excitation lumineuse extérieure. La solution décrite dans ce document vise à traiter individuellement le signal délivré par chaque élément photoconducteur. A cet effet, le dispositif comporte un circuit d'adaptation associé à chaque élément photoconducteur et comportant un élément résistif monté en parallèle avec un élément à conductance variable. L'élément à conductance variable étant destiné à fournir un courant de compensation d'une variation du courant délivré par l'élément photoconducteur, l'élément résistif étant destiné à fournir un deuxième courant de compensation pour compenser la variation de la conductivité de l'élément photoconducteur.

Le but de l'invention est de pallier les inconvénients de l'art antérieur cités ci-dessus au moyen d'un dispositif de conception simplifiée capable de fournir une correction adaptée à chaque détecteur thermique.

Un autre but de l'invention est de réduire la sensibilité des détecteurs thermiques aux variations de température du plan focal.

Selon l'invention, le module de compensation comporte au moins une deuxième branche d'ébasage destinée à extraire du signal électrique délivré par un détecteur au moins un deuxième signal de faible amplitude dû à la dispersion des résistances électriques des détecteurs thermiques et/ou aux fluctuations de la température du plan focal du module de détection.

Selon l'invention, l'une des première et deuxième branches est dédiée à la compensation des dispersions de résistance et l'autre branche est dédiée à la compensation des fluctuations de température au plan focal.

Il est également possible d'utiliser une même branche pour réaliser les deux types de compensation.

Grâce à l'ébasage réalisé par cette deuxième branche, le signal appliqué à l'entrée du module de lecture présente une amplitude notablement réduite par rapport au signal de polarisation. Le fait de n'avoir à corriger que des courants faibles dus à la seule dispersion des résistances électriques permet d'utiliser des circuits de traitement classiques, notamment des convertisseurs numériques-analogiques classiques pour générer les valeurs numériques des coefficients $C_x(i, j)$ sans dégrader de manière excessive le bruit du détecteur thermique.

En outre, lorsque le signal délivré par le détecteur est un courant, ces convertisseurs numériques-analogiques (CNA) peuvent être intégrés de façon monolithique avec les détecteurs thermiques.

Le dispositif selon l'invention permet d'améliorer le rendement lors de la fabrication des détecteurs thermiques en réduisant le nombre de détecteurs saturés. En effet, les détecteurs qui originellement avaient une réponse située en dehors de la plage d'entrée linéaire du module de lecture ne sont plus considérés a priori comme non conformes.

Le dispositif selon l'invention permet également d'augmenter la sensibilité de sortie du dispositif de détection et d'améliorer l'homogénéité de réponse sur l'image obtenue.

Selon l'invention, la deuxième branche est reliée à un circuit de correction destiné à générer, pour chaque détecteur thermique, une consigne spécifique permettant de commander l'extraction dudit deuxième signal.

Selon l'invention, la deuxième branche comporte un détecteur thermique passif monté en série avec un premier transistor dont la conduction est commandée par ladite consigne spécifique.

Selon l'invention, la deuxième branche comporte uniquement une source de courant et un deuxième transistor dont la conduction est commandée par ladite consigne spécifique, cette consigne peut être numérique ou analogique.

Selon un mode de réalisation, la deuxième branche comporte deux sous-branches, chaque sous branche comportant une source de courant calibrée associée à un transistor de commutation dont la commande est avantageusement réalisée par un signal numérique.

Selon l'invention, le détecteur thermique passif de la deuxième branche présente une résistance élevée par rapport à la résistance du micro-bolomètre passif de la première branche.

Selon l'invention, chaque détecteur thermique est constitué par un micro-bolomètre

Le procédé selon l'invention permet d'effectuer un ébasage en deux étapes, une première étape permettant d'extraire du signal électrique délivré par un détecteur thermique un premier signal de valeur constante dû à la polarisation de ce détecteur thermique, et une deuxième étape consistant à extraire du signal électrique un deuxième signal, de faible niveau par rapport au premier signal.

Le procédé selon l'invention, comporte en outre une phase de calibration du détecteur thermique comportant les étapes suivantes :

a) défocaliser la scène ;
b) mémoriser le signal résultant de l'étape précédente ;
c) utiliser le signal mémorisé pour commander l'extraction du signal de faible niveau dépendant d'au moins une caractéristique intrinsèque au détecteur thermique.

D'autres caractéristiques et avantages de l'invention ressortiront de la description qui va suivre, prise à titre d'exemple non limitatif, en référence aux figures annexées dans lesquelles :

- la figure 1 représente un schéma de principe d'un micro-bolomètre utilisé dans un dispositif selon l'invention ;
- Les figures 2 représentent un schéma de principe d'un dispositif de l'art antérieur,
- la figure 3 représente schématiquement et partiellement un premier mode de réalisation d'un dispositif de détection selon l'invention,
- la figure 4 représente schématiquement et partiellement un deuxième mode de réalisation d'un dispositif de détection selon l'invention,
- la figure 5 représente schématiquement et partiellement un troisième mode de réalisation d'un dispositif de détection selon l'invention,
- la figure 6 illustre schématiquement et partiellement un dispositif permettant de réaliser une calibration d'un détecteur thermique selon l'invention,
- la figure 7 représente schématiquement et partiellement un dispositif de compensation des fluctuations de température du plan focal d'un dispositif de détection selon l'invention.

Dans la description qui suit, les éléments remplissant la même fonction dans le dispositif de l'art antérieur et dans le dispositif selon l'invention seront désignés par des références identiques. Par ailleurs, afin de simplifier l'illustration de l'invention, un seul détecteur thermique a été représenté sur les figures 1 à 7.

La figure 1 décrite précédemment représente schématiquement un micro-bolomètre 2 qui peut être réalisé de manière monolithique avec le module de lecture 8, ou rapporté sur ce dernier au moyen d'un procédé adapté, par exemple des microbilles, dans le cas d'un plan de détection hybridé.

La figure 2 a été décrite précédemment et illustre schématiquement un module de compensation 10 dans un dispositif de l'art antérieur.

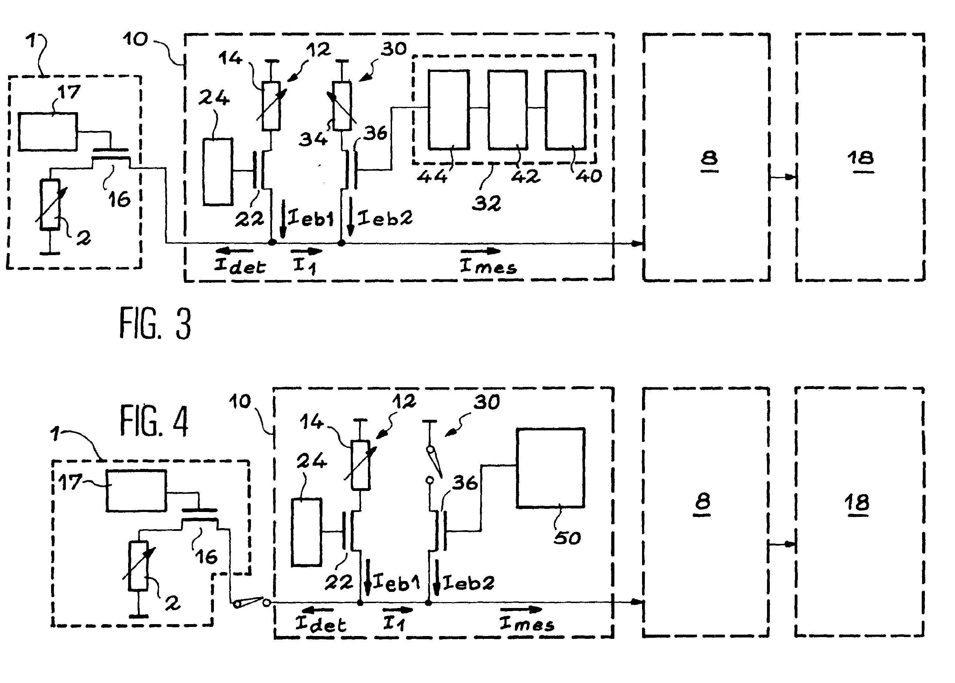

La figure 3 représente un dispositif selon l'invention dans lequel le module de détection 1 comporte un micro-bolomètre 2 polarisé en tension pour délivrer un courant $I_{det}$ représentatif d'un rayonnement IR détecté. Afin d'éviter l'échauffement du micro-bolomètre 2, la polarisation du micro-bolomètre 2 est réalisée selon un mode pulsé. Le courant $I_{det}$ est fourni à un module de compensation de signal 10 comportant une première branche 12 permettant de réaliser un premier ébasage pour extraire dudit signal $I_{det}$ un premier signal de valeur constante égale approximativement à 90% du courant de polarisation du micro-bolomètre 2.

La première branche d'ébasage 12 comporte un premier micro-bolomètre passif 14 en série avec un premier transistor de commande de conduction 22 piloté par une source d'alimentation filtrée 24. Cette première branche 12 permet de soustraire un courant $I_{eb1}$ du courant $I_{det}$ délivré par le micro-bolomètre actif 2. La valeur du courant $I_{eb1}$ est préalablement calculée en fonction de la résistance $R_b$ du micro-bolomètre actif 2 et de la résistance $R_{comp1}$ du premier micro-bolomètre passif 14. La tension de commande du premier transistor 22 est calculée de sorte que le courant qui circule dans la première branche 12 soit égal à $I_{eb1}$. Le courant $I_1$ résultant de la soustraction du courant $I_{eb1}$ représente approximativement 10% du courant de polarisation du micro-bolomètre actif 2.

Le module de compensation 10 comporte en outre une deuxième branche 30 permettant de réaliser un deuxième ébasage destiné à extraire du signal électrique $I_1$ résultant du premier ébasage un deuxième signal $I_{eb2}$ de faible niveau par rapport à $I_{eb1}$ et dû à la dispersion des résistances électriques des détecteurs thermiques et/ou aux fluctuations de la température du plan focal du module de détection 1.

Ladite deuxième branche 30 est reliée à un circuit de correction 32 destiné à générer, pour chaque détecteur thermique 2, une consigne spécifique permettant de commander l'extraction dudit deuxième signal $I_{eb2}$.

La deuxième branche d'ébasage 30 comporte un deuxième micro-bolomètre passif 34 ayant une résistance $R_{comp2}$ élevée par rapport à la résistance du premier micro-bolomètre passif 14. La valeur du courant $I_{eb2}$ extraite par cette deuxième branche 30 est proportionnelle à l'inverse de la valeur de la résistance $R_{comp2}$ et est réglée par un deuxième transistor 36 dont la conduction est commandée par une tension $V_{eb2}$ délivrée par le circuit de correction 32. Cette tension $V_{eb2}$ est calculée en fonction de la résistance $R_b$ du micro-bolomètre actif 2 et de la résistance $R_{comp2}$ du deuxième micro-bolomètre passif 34 de sorte que le courant qui circule dans le deuxième branche 30 soit égal à $I_{eb2}$.

Le circuit de correction 32 comporte un générateur 40 destiné à fournir une consigne numérique $C_x$(i,j) représentant la tension $V_{eb2}$ et un convertisseur numérique-analogique 42 destiné à convertir la consigne numérique en signal analogique de commande du deuxième transistor 36.

Un module d'atténuation 44 de la tension $V_{eb2}$ est agencé en amont du deuxième transistor 36 afin de réduire le bruit introduit par le convertisseur numérique-analogique 42.

Pour un module de détection matriciel, le deuxième ébasage est réalisé par une consigne numérique $C_x$(i,j) préalablement stockée dans une mémoire externe et calculée spécifiquement pour chaque micro-bolomètre 2.

La figure 4 représente un deuxième mode de réalisation dans lequel la deuxième branche d'ébasage 30 comporte uniquement un deuxième transistor 36 commandé directement par un générateur 50 apte à délivrer une tension analogique continue. Cette tension est appliquée au deuxième transistor 36 pour régler le courant $I_{eb2}$.

Comme dans le premier mode de réalisation, le courant $I_{eb2}$ dans la deuxième branche 30 est calculé de sorte que la dynamique du courant $I_{mes}$ soit située dans la dynamique de l'étage d'entrée du module de lecture 8.

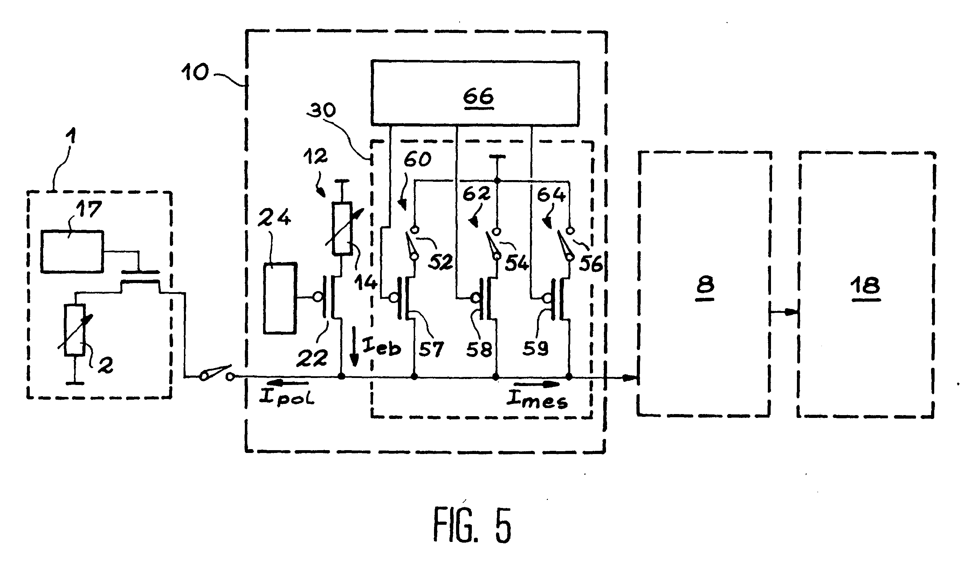

La figure 5 représente un troisième mode de réalisation de l'invention dans lequel la deuxième branche 30 comporte trois sous-branches 52, 54 et 56 montées en parallèle, chaque sous-branche étant susceptible de conduire un courant prédéterminé. La valeur du courant dans chacune des sous-branches 52, 54 et 56 est fixée respectivement par un transistor 57, 58 et 59 en régime de saturation agencé en série avec la sous-branche correspondante. Un transistor en régime de saturation étant un équivalent électrique à une source de courant.

Le principe consiste toujours à soustraire le courant d'ébasage en au moins deux branches. La première branche permet de soustraire un courant $I_{eb1}$ constant et la deuxième branche permet de soustraire un courant $I_{eb2}$ adapté à chaque détecteur et calculé en fonction d'une part, de sa résistance bolomètrique spécifique, et d'autre part, de la température du plan focal. Chaque sous-branche 52, 54 et 56 permet d'extraire un courant différent représentant une fraction du courant $I_{eb2}$. La conduction dans chacune des branches 52, 54 et 56 est autorisée respectivement par les interrupteurs 60, 62 et 64. La sélection d'une sous-branche est réalisée par des signaux logiques fournis par une unité programmable 66 qui commandent sélectivement les interrupteurs 60, 62 et 64. Ces signaux logiques peuvent être chargés par un registre approprié depuis l'extérieur du circuit. Bien entendu la deuxième branche 30 peut comporter un nombre N de sous-branches qui peut être modifié aisément selon la valeur du courant $I_{eb2}$ à extraire.

En fonctionnement, on affecte à la sous-branche 52 un courant élémentaire $I_{eb}$ représentant un bit de poids faible, un courant $2 \times I_{eb}$ pour la sous-branche 54 de poids intermédiaire, et un courant $4 \times I_{eb}$ pour la sous-branche 56 de poids fort. On peut alors configurer le module de compensation 10 pour soustraire des courants allant de 0 à $7 \times I_{eb}$, soit huit niveaux de courants différents.

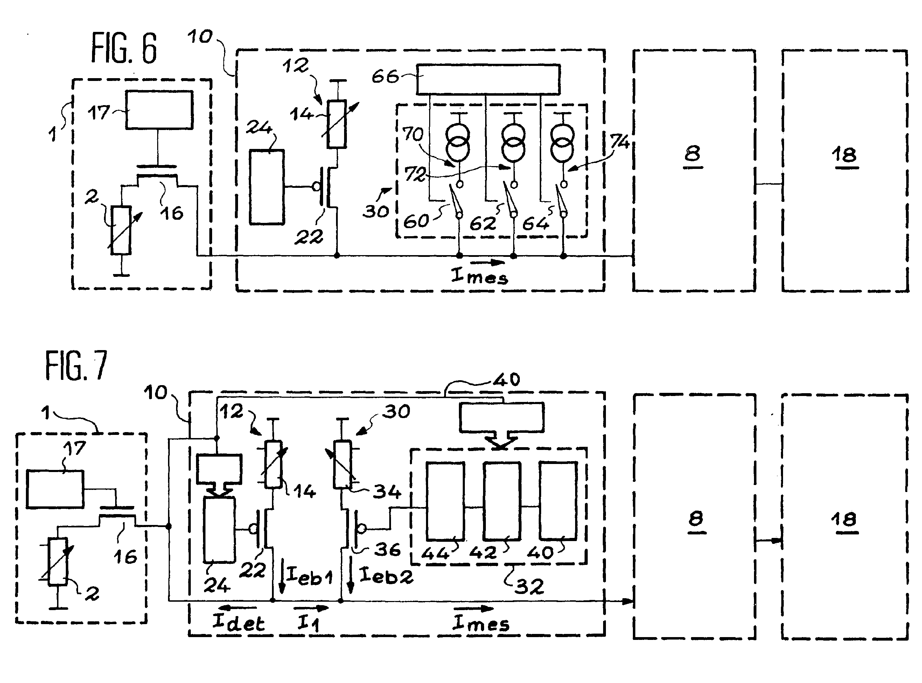

La figure 6 représente un mode de réalisation de l'invention dans lequel la deuxième branche 30 comporte plusieurs sous-branches 70, 72, 74. Chaque sous-branche est reliée à un générateur de courant calibré respectivement 76, 78, 80 réalisé par exemple de façon monolithique dans le circuit. La sélection d'une sous-branche est réalisée par des signaux logiques fournis par une unité logique programmable 66, qui commande sélectivement les interrupteurs 60, 62 et 64. Les signaux logiques peuvent être chargés par un registre approprié depuis l'extérieur du circuit ou un registre d'apprentissage dans le circuit.

La figure 7 représente un dispositif de compensation dans lequel chaque branche d'ébasage inclut un micro-bolomètre de compensation passif respectivement 14, 34 et où une boucle de contre-réaction 40 permet de réinjecter une mesure de la température du plan focal dans chacune des branches d'ébasage 12, 34 afin de moduler les courants à extraire en fonction de la température du plan focal. Ceci permet de diminuer la sensibilité du détecteur aux fluctuations de la température du plan focal.

Ainsi, le dispositif selon l'invention permet d'augmenter la sensibilité de sortie des détecteurs thermiques sans introduire de bruits supplémentaires.

## Revendications

1. Dispositif de génération d'image à partir d'un rayonnement IR comportant un module de détection (1) comprenant une pluralité de détecteurs thermiques (2) ayant chacun une résistance électrique spécifique et étant polarisé pour délivrer un signal représentatif d'un rayonnement IR détecté, ledit dispositif comportant un module de lecture (8) destiné à transformer ledit signal électrique en signal exploitable par un bloc de traitement d'image (18) et un module de compensation de signal électrique (10) fournissant un signal compensé à l'entrée du module de lecture (8) et comportant une première branche (12) permettant de réaliser un premier ébasage destiné à extraire dudit signal électrique un premier signal de valeur constante dû à la polarisation des détecteurs thermiques (2), dispositif **caractérisé en ce que** le module de compensation (10) comporte au moins une deuxième branche (30) permettant de réaliser un deuxième ébasage destiné à extraire du signal électrique résultant du premier ébasage au moins un deuxième signal de faible niveau dû à la dispersion des résistances électriques des détecteurs thermiques et/ou aux fluctuations de la température du plan focal du module de détection.

2. Dispositif selon la revendication 1, **caractérisé en ce que** ladite deuxième branche (30) est reliée à un circuit de correction (32) destiné à générer, pour chaque détecteur thermique, une consigne spécifique permettant de commander l'extraction dudit deuxième signal.

3. Dispositif selon l'une des revendications 1 ou 2, **caractérisé en ce que** la deuxième branche (30) comporte un détecteur thermique passif (34) monté en série avec un deuxième transistor (36) dont la conduction est commandée par ladite consigne spécifique.

4. Dispositif selon la revendication 2, **caractérisé en ce que** la deuxième branche (30) comporte uniquement une source de courant et un premier transistor de commande (36) dont la conduction est commandée par ladite consigne spécifique.

5. Dispositif selon la revendication 1, **caractérisé en ce que** la deuxième branche (30) comporte une pluralité de sous-branches (52,54,56) montées en parallèle, chaque sous-branche étant susceptible de conduire un courant prédéterminé.

6. Dispositif selon l'une des revendications 1 à 4, **caractérisé en ce que** la première branche (12) comporte un détecteur thermique passif (14) agencé en série avec un premier transistor de commande (22) dont la conduction est commandée par une tension constante.

7. Dispositif selon la revendication 6, **caractérisé en ce que** chaque détecteur thermique (2) est constitué par un micro-bolomètre.

8. Dispositif selon les revendications 3 et 7, **caractérisé en ce que** le deuxième micro-bolomètre passif (34) de la deuxième branche (30) présente une résistance élevée par rapport à la résistance du premier micro-bolomètre passif (14) de la première (12).

9. Dispositif selon la revendication 3, **caractérisé en ce que** le circuit de correction (32) comporte un générateur (40) destiné à fournir une consigne numérique, un convertisseur numérique-analogique (42) destiné à convertir ladite consigne numérique en tension analogique pour commander le deuxième transistor (36).

10. Dispositif selon la revendication 9, **caractérisé en ce que** le circuit de correction (32) comporte en outre un module d'atténuation (44).

11. Dispositif selon la revendication 4, **caractérisé en ce que** le circuit de correction (32) comporte un générateur (50) de tension continue destiné à fournir une tension analogique continue permettant de régler le courant dans ladite deuxième branche (30).

12. Dispositif selon l'une des revendications 1 à 11, **caractérisé en ce que** le bloc de compensation (10) comporte une boucle de régulation permettant de réinjecter dans chacune des branches d'ébasage (12), (30) une mesure de la température du plan focal du module de détection (1) de manière à moduler les valeurs des signaux extraits par la première branche (12) et la deuxième branche (30) en fonction de la température du plan focal de détection.

13. Dispositif selon la revendication 12, **caractérisé en ce que** les micro-bolomètres actifs (2) sont répartis sur le plan focal du dispositif de détection en M lignes et N colonnes.

14. Dispositif selon la revendication 9, **caractérisé en ce que** le convertisseur numérique-analogique (42) est intégré de façon monolithique avec le micro-bolomètre (2).

**15.** Dispositif selon l'une des revendications 1 à 14, **caractérisé en ce que** l'une des première et deuxième branches (12,30) est dédiée à la compensation des dispersions de résistance et l'autre branche est dédiée à la compensation des fluctuations de température au plan focal.

**16.** Dispositif selon la revendication 15, **caractérisé en ce que** la deuxième branche (30) comporte deux sous-branches, chaque sous branche comprenant une source de courant équilibrée associée à un transistor de commutation commandée par un signal numérique.

**17.** Procédé de correction d'un signal électrique représentant un rayonnement IR détecté par un détecteur thermique (2) ayant une résistance électrique spécifique, ledit signal étant transformé par un module de lecture (8) en un signal exploitable par un bloc de traitement d'image (18), et compensé par un module de compensation de signal électrique (10) destiné à fournir un signal compensé à l'entrée du module de lecture (8) en vue de générer une image à partir du rayonnement IR, procédé comportant une première étape d'ébasage destiné à extraire dudit signal électrique un premier signal de valeur constante dû à la polarisation des détecteurs thermiques (2), procédé **caractérisé en ce qu'**il comporte une deuxième étape d'ébasage destiné à extraire du signal électrique résultant de la première étape d'ébasage au moins un deuxième signal de faible niveau dû à la dispersion des résistances électriques des détecteurs thermiques et/ou aux fluctuations de la température du plan focal du module de détection.

**18.** Procédé selon la revendication 17, **caractérisé en ce qu'**il comporte une étape consistant à générer une consigne spécifique permettant de commander l'extraction dudit deuxième signal.

**19.** Procédé selon la revendication 18, **caractérisé en ce qu'**il comporte une phase de calibration du détecteur thermique (2) comportant les étapes suivantes :

a) défocaliser la scène ;
b) mémoriser le signal résultant de la défocalisation de la scène ;
c) utiliser le signal mémorisé pour commander l'extraction du signal faible niveau.

**Claims**

**1.** A device for generating an image from an IR radiation comprising a detection module (1) including a plurality of heat detectors (2) each having a specific electric resistance and being polarised so as to deliver a signal representing a detected IR radiation, said device comprising a read module (8) intended to convert said electric signal into a signal which can be used by an image processing block (18) and an electric signal compensation module (10) comprising a first branch (12) making it possible to carry out a first thresholding intended to extract from said electric signal a first constant value signal due to the polarisation of the heat detectors (1), a device **characterised in that** the compensation module (10) comprises at least one second branch (30) making it possible to carry out a second thresholding intended to extract from the electric signal resulting from the first thresholding at least one second low-level signal due to the dispersion of the electric resistances of the heat detectors and/or to the fluctuations in the temperature of the focal plane of the detection module.

**2.** A device according to claim 1, **characterised in that** said second branch (30) is connected to a correction circuit (32) intended to generate, for each heat detector, a specific setting allowing the extraction of said second signal to be controlled.

**3.** A device according to one of claims 1 or 2, **characterised in that** the second branch (30) comprises a passive heat detector (34) mounted in series with a second transistor (36) the conduction of which is controlled by said specific setting.

**4.** A device according to claim 2, **characterised in that** the second branch (30) comprises only a current source and a first control transistor (36) the conduction of which is controlled by said specific setting.

**5.** A device according to claim 1, **characterised in that** the second branch (30) comprises a plurality of sub-branches (52,54,56) mounted in parallel, each sub-branch being able to conduct a pre-set current.

**6.** A device according to claim 4, **characterised in that** the first branch (12) comprises a passive heat detector (14) provided in series with a first control transistor (22) the conduction of which is controlled by a constant voltage.

**7.** A device according to claim 6, **characterised in that** each heat detector (2) is constituted by a micro-bolometer.

**8.** A device according to claim 7, **characterised in that** the second passive micro-bolometer (34) of the second branch (34) has a high resistance relative to the resistance of the first passive micro-bolometer (14) of the first one (12).

**9.** A device according to claim 3, **characterised in that** the correction circuit (32) comprises a generator (40) intended to provide a digital setting, a digital-to-analogue converter (42) intended to convert said digital setting into analogue voltage so as to control the second transistor (36).

10. A device according to claim 9, **characterised in that** the correction circuit (32) additionally comprises an attenuation module (44).

11. A device according to claim 4, **characterised in that** the correction circuit (32) comprises a DC voltage generator (50) intended to supply a DC analogue voltage allowing the current in said second branch (30) to be regulated.

12. A device according to claim 1, **characterised in that** the compensation block (10) comprises a control loop making it possible to re-inject into each of the thresholding branches (12),(30) a measurement of the temperature of the focal plane of the detection module (1) so as to modulate the values of the signals extracted by the first branch (12) and the second branch (30) as a function of the temperature of the focal plane of detection.

13. A device according to claim 12, **characterised in that** the active micro-bolometers (2) are distributed over the focal plane of the detection device in M lines and N columns.

14. A device according to claim 9, **characterised in that** the digital-to-analogue converter (42) is integrated monolithically with the micro-bolometer (2).

15. A device according to claim 1, **characterised in that** one of the first and second branches (12,30) is dedicated to compensating for resistance dispersions and the other branch is dedicated to compensating for temperature fluctuations in the focal plane.

16. A device according to claim 15, **characterised in that** the second branch (30) comprises two sub-branches, each sub-branch including a balanced current source associated with a switching transistor controlled by a digital signal.

17. A process for correcting an electric signal representing an IR radiation detected by a heat detector (2) having a specific electric resistance, said process comprising a first stage allowing a first polarisation signal having a constant value to be extracted from the electric signal, a process **characterised in that** it comprises a second stage consisting in extracting from the electric signal a second signal, of low level relative to the first signal.

18. A process according to claim 17, **characterised in that** it comprises a stage consisting in generating a specific setting allowing the extraction of said second signal to be controlled.

19. A process according to claim 18, **characterised in that** it comprises a heat detector (2) calibration phase comprising the following stages:

  a) defocusing the scene;
  b) storing the signal resulting from the previous stage;
  c) using the stored signal to control the extraction of the low level signal.

**Patentansprüche**

1. Bilderzeugungsvorrichtung zur Erzeugung eines Bildes ausgehend von einer Infrarotstrahlung, mit einem Detektionsmodul (1), das mehrere thermische Detektoren (2) aufweist, die jeweils einen spezifischen elektrischen Widerstand haben und gepolt sind, um ein Signal auszugeben, das repräsentativ ist für eine detektierte IR-Strahlung, wobei die Vorrichtung ein Lesemodul (8) zur Umwandlung des elektrischen Signals in ein von einem Bildverarbeitungsblock (18) nutzbares Signal und ein Kompensationsmodul zur Kompensation des elektrischen Signals (10) aufweist, das am Eingang des Lesemoduls (8) ein kompensiertes Signal bereitstellt und einen ersten Zweig (12) aufweist, der erlaubt, einen ersten Basisschnitt durchzuführen, um aus dem elektrischen Signal ein erstes Signal mit konstantem Wert zu extrahieren, das der Polung der thermischen Detektoren (2) zuzuschreiben ist, **dadurch gekennzeichnet, dass** das Kompensationsmodul (10) mindestens einen zweiten Zweig (30) aufweist, der erlaubt, einen zweiten Basisschnitt durchzuführen, der dazu dient, aus dem elektrischen Signal, das aus dem ersten Basisschnitt resultiert, mindestens ein zweites Signal niedrigen Pegels zu extrahieren, das der Variabilität der elektrischen Widerstände der thermischen Detektoren und/oder Fluktuationen der Temperatur der Fokalebene des Detektionsmoduls zuzuschreiben ist.

2. Vorrichtung nach Anspruch 1, **dadurch gekennzeichnet, dass** der zweite Zweig (30) mit einer Korrekturschaltung (32) verbunden ist, die dazu dient, für jeden thermischen Detektor einen spezifischen Einstellwert zu erzeugen, um das Extrahieren des zweiten Signals zu steuern.

3. Vorrichtung nach einem der Ansprüche 1 oder 2, **dadurch gekennzeichnet, dass** der zweite Zweig (30) einen passiven thermischen Detektor (34) aufweist, der in Serie mit einem zweiten Transistor (36) angeordnet ist, dessen Leitung von dem spezifischen Einstellwert gesteuert wird.

**4.** Vorrichtung nach Anspruch 2, **dadurch gekennzeichnet, dass** der zweite Zweig (30) nur eine Stromquelle und einen ersten Steuertransistor (36) aufweist, dessen Leitung von dem spezifischen Einstellwert gesteuert wird.

**5.** Vorrichtung nach Anspruch 1, **dadurch gekennzeichnet, dass** der zweite Zweig (30) mehrere Unterzweige (52,54,56) aufweist, die parallel angeordnet sind, wobei jeder Unterzweig einen vorgegebenen Strom leiten kann.

**6.** Vorrichtung nach einem der Ansprüche 1 bis 4, **dadurch gekennzeichnet, dass** der erste Zweig (12) einen passiven thermischen Detektor (14) aufweist, der in Serie mit einem ersten Steuertransistor (22) angeordnet ist, dessen Leitung von einer konstanten Spannung gesteuert wird.

**7.** Vorrichtung nach Anspruch 6, **dadurch gekennzeichnet, dass** jeder thermische Detektor (2) aus einem Mikrobolometer besteht.

**8.** Vorrichtung nach den Ansprüchen 3 und 7, **dadurch gekennzeichnet, dass** das zweite passive Mikrobolometer (34) des zweiten Zweigs (30) einen erhöhten Widerstand im Vergleich zu dem Widerstand des ersten passiven Mikrobolometers (14) des ersten Zweigs (12) aufweist.

**9.** Vorrichtung nach Anspruch 3, **dadurch gekennzeichnet, dass** die Korrekturschaltung einen Generator (40), der dazu dient, einen digitalen Einstellwert bereitzustellen, und einen Digital/Analog-Wandler (42) aufweist, der dazu dient, den digitalen Einstellwert in eine Analogspannung umzuwandeln, um den zweiten Transistor (36) zu steuern.

**10.** Vorrichtung nach Anspruch 9, **dadurch gekennzeichnet, dass** die Korrekturschaltung (32) außerdem ein Dämpfungsmodul (44) aufweist.

**11.** Vorrichtung nach Anspruch 4, **dadurch gekennzeichnet, dass** die Korrekturschaltung (32) einen Gleichspannungsgenerator (50) aufweist, der dazu dient, eine analoge Gleichspannung bereitzustellen, die die Regelung des Stroms in dem zweiten Zweig (30) erlaubt.

**12.** Vorrichtung nach einem der Ansprüche 1 bis 11, **dadurch gekennzeichnet, dass** der Kompensationsblock (10) eine Regelschleife aufweist, um in jeden der Basisschnittzweige (12) eine Messung der Temperatur der Fokalebene des Detektionsmoduls (1) einzuspeisen, um die Werte der von dem ersten Zweig (12) und dem zweiten Zweig (30) extrahierten Signale als Funktion der Temperatur der Detektionsfokalebene zu modulieren.

**13.** Vorrichtung nach Anspruch 12, **dadurch gekennzeichnet, dass** die aktiven Mikrobolometer (2) in der Fokalebene der Detektionsvorrichtung auf M Zeilen und N Spalten verteilt sind.

**14.** Vorrichtung nach Anspruch 9, **dadurch gekennzeichnet, dass** der Digital/Analog-Wandler (42) auf monolithische Weise mit dem Mikrobolometer (2) integriert ist.

**15.** . Vorrichtung nach einem der Ansprüche 1 bis 14, **dadurch gekennzeichnet, dass** von dem ersten (12) und zweiten (30) Zweig der eine Zweig für die Kompensation der Widerstandsvariabilität und der andere Zweig für die Kompensation der Temperaturfluktuationen in der Fokalebene vorgesehen ist.

**16.** Vorrichtung nach Anspruch 15, **dadurch gekennzeichnet, dass** der zweite Zweig (30) zwei Unterzweige aufweist, wobei jeder Unterzweig eine Gleichgewichtsstromquelle aufweist, die mit einem von einem digitalen Signal gesteuerten Schalttransistor verbunden ist.

**17.** Verfahren zur Korrektur eines elektrischen Signals, das repräsentativ ist für eine IR-Strahlung, die von einem thermischen Detektor (2), der einen spezifischen elektrischen Widerstand hat, detektiert wird, wobei das Signal von einem Lesemodul (8) in ein von einem Bildverarbeitungsblock (18) nutzbares Signal umgewandelt wird und von einem elektrischen Signalkompensationsmodul (10) kompensiert wird, um am Eingang des Lesemoduls (8) ein kompensiertes Signal bereitzustellen, und ausgehend von der IR-Strahlung ein Bild zu erzeugen, wobei das Verfahren einen ersten Basisschnitt-Schritt aufweist, um aus dem elektrischen Signal ein erstes Signal mit kontantem Wert zu extrahieren, das der Polung der thermischen Detektoren (2) zuzuschreiben ist, wobei das Verfahren **dadurch gekennzeichnet, dass** es einen zweiten Basisschnitt-Schritt aufweist, um aus dem elektrischen Signal, das aus dem ersten Basisschnitt-Schritt resultiert, mindestens ein zweites Signal niedrigen Pegels zu extrahieren, das der Variabilität der elektrischen Widerstände der thermischen Detektoren und/oder Fluktuationen der Temperatur der Fokalebene des Detektionsmoduls zuzuschreiben ist.

**18.** Verfahren nach Anspruch 17, **dadurch gekennzeichnet, dass** es einen Schritt aufweist, der darin besteht, einen spezifischen Einstellwert zu erzeugen, um das Extrahieren des zweiten Signals zu steuern.

**19.** Verfahren nach Anspruch 18, **dadurch gekennzeichnet, dass** es eine Kalibrierungsphase zum Kalibrieren des thermischen Detektors (2) aufweist, die die folgenden Schritte aufweist:

a) Defokussieren der Szene;
b) Speichern des Signals, das aus der Defokussierung der Szene resultiert;
c) Verwenden des gespeicherten Signals, um das Extrahieren des Signals niedrigen Pegels zu steuern.

FIG. 1

FIG. 2

FIG. 3

FIG. 4

EP 1 211 888 B1

FIG. 5

EP 1 211 888 B1

FIG. 6

FIG. 7

EP 1 211 888 B1

14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5600143 A, (WALMSLEY CHARLES F